(19) **Europäisches Patentamt**

**European Patent Office**

**Office européen des brevets**

(11) **EP 0 828 332 B1**

(12) ## EUROPEAN PATENT SPECIFICATION

(45) Date of publication and mention
of the grant of the patent:
**06.05.2004 Bulletin 2004/19**

(51) Int Cl.⁷: **H02H 7/08**, F04B 37/00

(21) Application number: **97305848.0**

(22) Date of filing: **01.08.1997**

(54) **Vacuum pump status evaluation system**

System zur Auswertung des Zustandes einer Vakuumpumpe

Système d'évalution de l'état d'une pompe à vide

(84) Designated Contracting States:
**CH DE FR GB IT LI**

(30) Priority: **05.08.1996 GB 9616457**

(43) Date of publication of application:
**11.03.1998 Bulletin 1998/11**

(73) Proprietor: **The BOC Group plc
Windlesham Surrey GU20 6HJ (GB)**

(72) Inventor: **Konishi, Satoshi
Suginami-ku, Tokyo 167 (JP)**

(74) Representative: **Bousfield, Roger James et al
The BOC Group plc
Chertsey Road
Windlesham Surrey GU20 6HJ (GB)**

(56) References cited:
**EP-A- 0 464 571        US-A- 4 699 570**

- **PATENT ABSTRACTS OF JAPAN vol. 95, no. 11,
26 December 1995 & JP 07 213093 A (EBARA
CORP), 11 August 1995,**
- **PATENT ABSTRACTS OF JAPAN vol. 97, no. 4,
30 April 1997 & JP 08 319986 A (HITACHI LTD), 3
December 1996,**

**Description**

This invention relates to improvements in vacuum pump systems, in particular improvements aimed at predicting the useful life of the vacuum pump before maintenance or removal of the pump is necessary.

Vacuum pumps are employed in numerous types of chemical processes in which substances evacuated through the pump can lead to the deposition of unwanted layers of material on internal surfaces of the pump mechanism which in turn can lead to loss of pump performance and ultimately to pump failure.

Vacuum pumps are often employed as part of, or in conjunction with, plant which is both expensive to build and expensive to operate. It is therefore useful to be able to predict any reduction in pump performance due to the deposition of unwanted layers of material on internal surfaces in situ in the plant to enable the pump to be withdrawn from service in the plant for maintenance or renewal before any great deterioration or failure of the pump occurs in service.

It is known that the additional frictional and other loads on the rotor of a vacuum pump caused by the presence of layers of unwanted material on stator internal surfaces can be monitored to a certain extent by measuring the electrical current supplied to the motor used to drive the pump rotor(s). Such additional loads are sometimes referred to as the pump "tightness".

However, it has been found that a measurement of current often does not provide a reliable indication of pump tightness due to the fact that the measured current is not provided in time-series fashion or with other factors; the current signal that is instantaneously measured is therefore always contaminated with time-varying noise and its true magnitude against each time cannot be identified.

There is therefore a need for a more reliable method of monitoring pump tightness and thereby avoiding acute deterioration and/or failure of the pump during use.

US-A-4699570 describes a pump operating system utilising a feed-back control.

In accordance with the invention, there is provided a process for monitoring the performance of a vacuum pump during its use and for predicting its future operating characteristics, comprising periodically measuring, during a revolution of a rotor of a motor for driving the pump, the rotational torque or the motor current in response to motor load, generating signals corresponding to the measured rotational torque or the measured motor current; and, at computation means, the steps of processing the generated signals to provide a series of torque data, pairing the torque data with data relating to the rotational position of the rotor during the revolution, and predicting from the variation of torque data with rotational position the future operating characteristics of the pump.

Preferably, the torque and/or current is measured through an electrical power control means (or inverter) which controls the operation of the motor. Preferably also, the inverter generates power by which the motor rotates.

Preferably, an interface means converts the torque signal in and/or current to a digital signal which can be received by the computation means.

In preferred embodiments, the interface means comprises a communication port linked to a port of the inverter from which the torque signal and/or current signal is an output, preferably in digital mode, an interpreter means to interpret the signal such that the signal can be communicated on a data bus line to which a memory means and communication controller which controls the data transfer on the bus line are connected and a separate pair of an interpreter port and communication port connected to the digital computation means.

Overall, the use of an inverter can control the motor at a constant rotational speed and therefore the torque measured in the system of the invention is that of a motor providing constant and stable vacuum conditions to the equipment for which the pump is used.

The control of the motor at a constant rotational speed is given by a vector control for induction motors and by power control for synchronous motors respectively. For induction motor, a rotational speed sensor is attached to the motor to detect the rotation speed of the motor rotator. The inverter controls the magnitude and frequency of the driving current in accordance with the slippage of the driving current frequency to the actual motor rotation frequency for the induction motors and does the product of effective power and power factors.

A constant rotational speed is maintained by the inverter and therefore the measured torque can provide more direct information of the tightness of pump rotation. When the tightness increases more than the torque given by the driving force of the motor, the pump is deteriorating. Therefore the torque measurement represents the status of the pump.

The torque information is, however, contaminated with the pump load condition, so that the torque is the summation of pump tightness and pumping condition such as in the ultimate vacuum condition of when pumping out the process gas. The torque is also fluctuating with the noise and time varying friction. The importance is to extract the pump tightness from the actual data. To do this we use a filtering algorithm by which we can extract the most likely load against the pump by eliminating the noise and the undeterminable time-varying signal. The torque due to pumping out the process gas represents the process load of the pump which is in service for the plant. However, the magnitude of this load is a few percent in the overall torque because the pressure of the process gas is quite low. In eliminating the noise, we use torque data or equivalent ones which are measured in time-series fashion in digital mode. In the application of a filtering algorithm to extract the most likely load, the torque data is processed with the digital filtering computation. By this process, we obtain an estimate of the torque as the most likely load. As the result, the estimate of the torque signal mostly represents the pump tightness.

When we apply a filtering algorithm to extract the most likely data, the estimate of the torque is obtained. By using this data, it is easy to find out the starting time when the pump has a large mechanical stress. The importance is to identify the time when the pump starts to be tight. A prediction algorithm can provide, as an estimate of the torque, the most likely data which is not fluctuated by a time varying noise; it therefore works as a smoother and represents the intrinsic pump tightness which is the cause of actual torque. It also predicts the possible torque with a designated advanced time. If the advanced time is early enough prior to shutting off the equipment which uses the pump, we can avoid the risk of pump stop while operation of the equipment. When this prediction is associated with the service rule of the pump, we can execute a preventive maintenance of the pumps.

As we have the torque information with the information of the rotational position of the rotor of the pump, or that with the rotational angle (in a mode of 360 degrees) referenced to a certain reference rotation angle as zero degree the combination of information as torque and rotational position of the rotor shows the trace of the torque against its rotational position. From this trace we can obtain the tightest angle of the rotor which represents a partial friction stress against a uniform one. If it is the partial one, we can conclude the foreign material in the pump is localised or is distributed inhomogeneously in its rotational mechanism. It gives the indication of pump status in terms of the closeness to stop. In practice, when range of the tightest angle becomes wide and finally is (or tends to be) uniform at a high level over the angle range of 0 to 360 degrees, then the pump status is much serious and shows a shorter life before stopping. When this measurement is carried out after pump assembly, we can determine whether there is a localised tight portion in mechanical construction and can use as an inspection test method for pump assembly lines.

For a better understanding of the invention, reference will now be made, by way of exemplification only, to the accompanying drawings in which:

Figure 1 shows a schematic representation of a vacuum pumping system of the invention.

Figure 2 shows details of an interface between the inverter and the computer of the vacuum pump system of Figure 1.

Figure 3 shows sets of N torque data measured in time-series which are processed for computation in the vacuum pump system of Figures 1 and 2.

Figure 4 shows the hierarchy of the programs used for torque estimation and prediction.

Figure 5 shows the flow of the computer processing by the computer 6 of the vacuum pump system of Figure 1 and that after data measurement are shown in Figure 3.

Figure 6 shows the hierarchy of the program used for a friction mapper.

Figure 7 shows a graph of a typical set of torque data as a function of rotational angle.

Figure 8 shows the hierarchy of the programs used for the torque estimation and prediction.

Figure 9 shows another hierarchy of the programs used for a friction mapper.

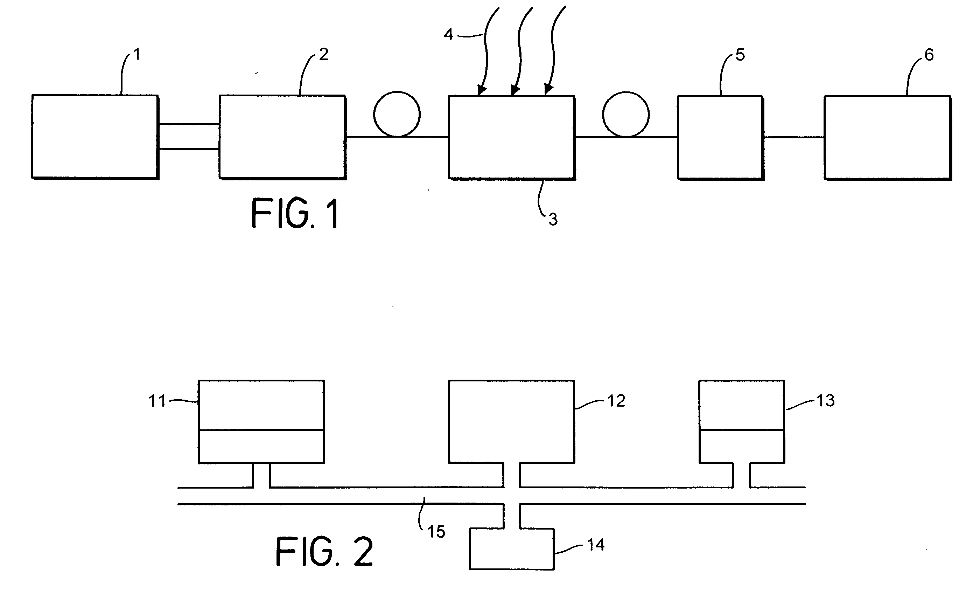

With reference to the drawings and to Figure 1 in particular, there is shown a vacuum pumping system comprising a mechanical vacuum pump 1 driven by a three-phase induction motor 2. The motor power is supplied by an inverter 3 which has the vector control to provide a constant rotational speed by means of a control of the frequency of the AC motor power supplied thereto. The electric power is supplied to the inverter through the electric power supply cables 4.

An interface 5 converts a signal of the motor rotational torque to a digital signal readable by a computer 6 attached thereto. The interface 5 has - as shown in Figure 2 - a first communication port 11 with interpreter means and linked to the inverter 3, a communication controller 12 and a second communication port 13 (again with interpreter means) leading to the computer 6. The communication ports 11, 13, the communication controller 12 and a memory 14 are all linked via a bus line 15 in the normal way. If the signal of motor rotation torque is provided by the inverter in analogue mode, an analogue-digital converter is attached to the first communication port 11.

The computer 6 has a communication port for linking with the interface 5 and comprises memories, one for storing programs for the designated computation and the other for data storage, an arithmetic logic unit for performing the designate computation and display that displays the results of the computed data (stored in the data memory) through the display controller which manages all of the presentation of the data in an intended form.

The torque calculation of the motor are made by the inverter 3 and the torque signal is processed by the computer 6. The first computer processing carried out in the filtering algorithm is a system identification to determine the system characterising the signal. Once the system of the signal is found, it is easy to estimate the most likely torque. In this identification step, we calculate AIC (Akaike Information Criterion; reference to H. Akaike, Ann. Inst. Statist. Math., Vol. 23, pp. 163-180 (1971)). The system determined by this system identification reflects the friction process of the pump rotor which results into a torque in its observation.

The next processing is to predict the future torque. By this processing, we obtain the estimated future torque based on the most likely torque previously shown up to the present time. This sequential data includes a trend of torque data in time progression and therefore it can provide a reliable future torque.

One example, of the results given by the above processing is as follows. When the pump operates in the initial time just after a service, there is no friction of the rotor with foreign material in the pump or less tightness with other assembled pump portions. Therefore, the signal mode prescribed by an auto-regression (AR) model has a low order which is analysed in the system identification process, in most cases as first order and the torque signal is affected much by the time-varying random mechanical noise.

However, when the pump includes a certain amount of foreign material, mostly by-products produced in the pumping of the process gasses, the order of the AR model has more orders such as a third one. Therefore, the number of the order in the AR model which is determined by the system identification is a major determination parameter to indicate the pump status. The order of AR model is provided by minimising the AIC, such that the order determines the system of the signal to be given in the most likely model. The AIC is used for the determination of alarming and stopping the pump system since it can indicate the health of the pump.

When the system of the signal is identified, the step of prediction gives the estimated torque in future time.

The step for presentation for display handles the results of the predicted torque as given by an estimated value and also the warning signal and stop signal for the pump operation. These two signals are generated by the AIC in this presentation step. The stop signal is also sent back to the inverter through the interface, and then the pump is stopped by this signal.

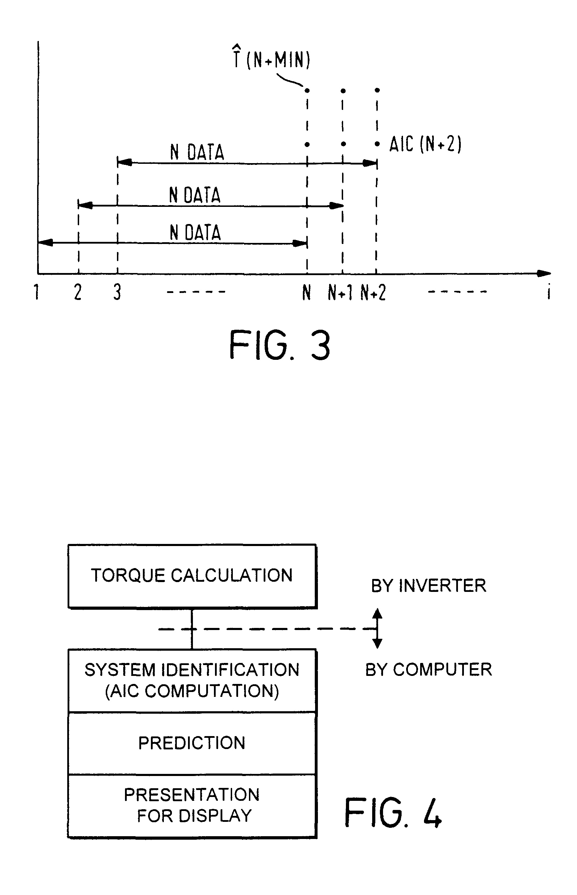

The calculation is performed by each sequential N data of torque measured in time-series fashion. Therefore the first time before N torque data are provided, no outputs, such as the estimated torque and the AIC, are given from this computation process as shown in Figure 3.

Figure 4 shows the hierarchy of the programs used for torque estimation and prediction. The torque signal is given by the inverter. The system for which the torque signal is prescribed is identified in the layer of system identification. In this identification, the AIC is computed for the determination of the most likely model of the torque signal. From the system which is determined by the process of system identification, the torque is estimated as the most likely value. Also the system is used to predict the likely torque in the future time on the basis of a sequential past torque data. The predicted torque is presented on a computer display with other relevant information in accordance with the progress of time.

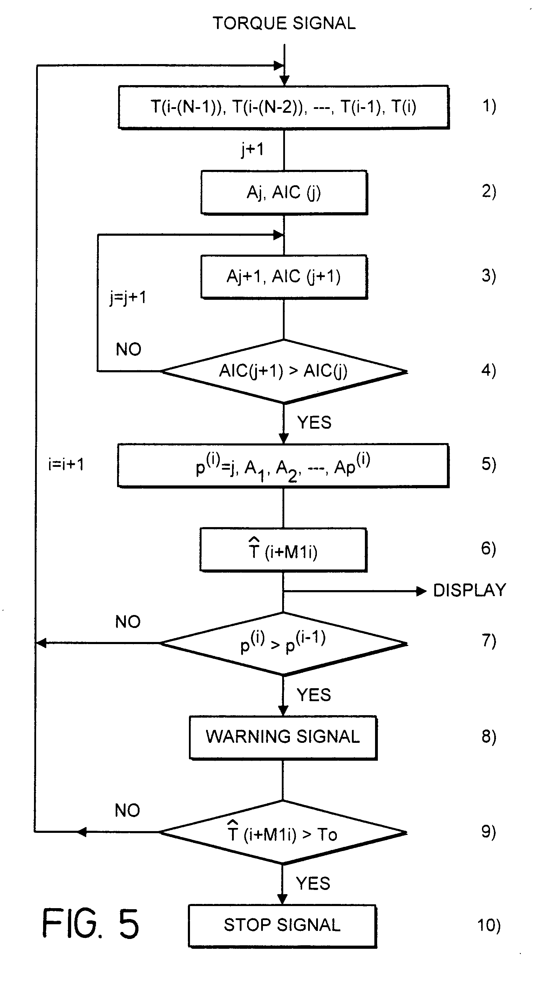

Figure 5 shows the flow of the computer processing by the computer 6 as described above. The torque signals are stored to the group of N data; T(i-(N-1)), T(i-(N-2)), ....., T(i-1), T(i) in step 1. By using all of these N data, we calculate the AR coefficient Aj and AIC(j) from 1 to j until the minimum AIC(j) is given in the steps 2 - 4. In steps 2 and 3, all AR coefficients and the AICs as Aj and AIC(j) are provided by the system identification computation. When AIC is at a minimum at a certain j, the j is the most likely order p(i) of the AR model at a time i. The relation between AR coefficient and the torque is given at the time i by,

$$T(i) = \sum_{k=1}^{p^{(i)}} A_k T(i-k) + e(i)$$

where e(i) is a noise at the time i, T(i) the torque at time i and $A_k$ the k-th AR coefficient.

After all AR coefficients have been identified at the present time i based with the past N data up to the present time, we obtain the estimate of torque at the present time i as

$$\hat{T}(i) = \sum_{k=1}^{p^{(i)}} A_k \, T(i-k)$$

by using the parameters obtained at step 5. Then we start a prediction step from 6) where the estimated torque in the future time advanced by M, given as T(i+M|i), is calculated on the basis of the all data obtained from the time i-(N-1) to i. This estimated value is displayed as a predicted torque. We compare the present order of AR model $p^{(i)}$ with the previous one $p^{(i-1)}$ at step 7. If the present order number is smaller or equal to the previous one then, the pump rotor friction scheme is unchanged and then we advance to the next set of torque calculation. If the present order number is larger than the previous one, then the pump rotor friction scheme is changed and a warning signal is raised at step 8). And it is checked whether the predicted torque obtained at step 6 is more than a certain magnitude as To which represents the danger level of pump status, then a pump stop signal is generated to stop the pump operation (step 10) since the pump life becomes close to the end since the pump torque is predicted to be high. If the predicted torque is less than To, advance is made to the next set of torque calculations.

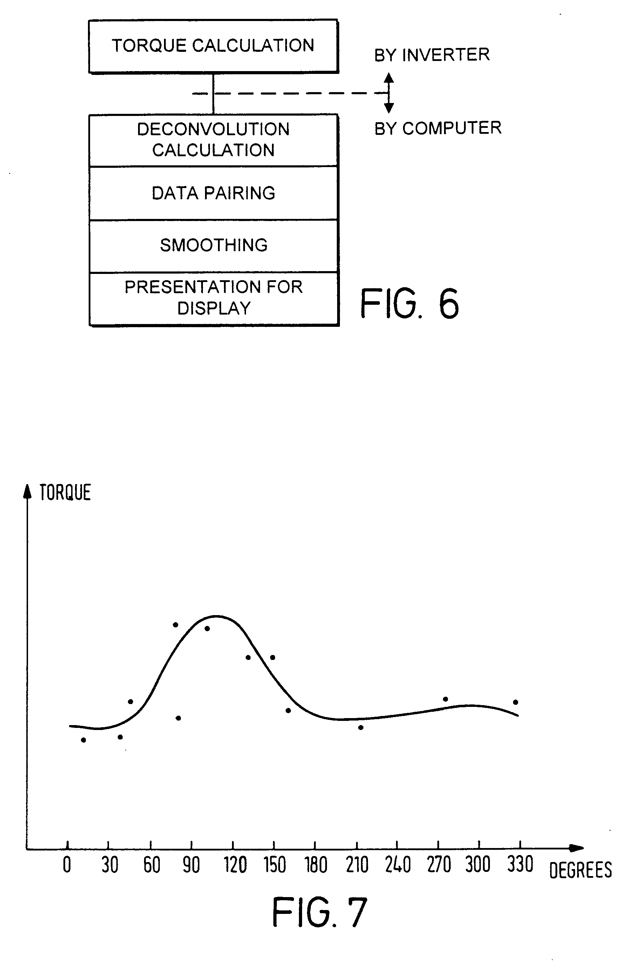

Figure 6 shows the hierarchy of the programme used for a friction "mapper". The torque signal given by the inverter is filtered by the electrical characteristics of the motor circuit, therefore in the layer of deconvolution calculation, the torque is deconvolved from the filter characteristics of the motor circuit where a deconvolution algorithm is used for the calculation. The torque data, measured in time-series fashion, is paired with the data of rotor angular position of the motor in the layer of data pairing. The angular position is given in the mode of 360 degree angle. The instantaneous torque is rearranged in the rotational angle. The data are contaminated with noise, therefore the data is smoothened to decrease the effect of noise in the layer of smoothing. For the smoothing filtration, the system identification algorithm or Kalman filter algorithm (Reference to; R E Kalman, "A New Approach to Linear Filtering and Prediction Problems", Trans. ASME, J Basic Eng., vol. 82D, no. 1 (1960), 34-45) is used with the angular data as a sequential variable. The display presents the torque data as a function of rotational angle. Figure 7 is an example of presentation. By this, we can conclude the rotor has high stress at the angle for 45 - 180 degrees. This indicates the pump has partially tight assembly (the pump is newly assembled). In practice, for this condition, the pump can be matured while running and the rotor friction decreases and becomes uniformly at a low level.

After long running of the pump, the pump tends to show the uniform torque at high level over the full range of angle 0-360 degrees. This large torque shows the uniform tightness of pump running due to the accumulation of by-products in the pump and consequently indicates that the pump has become close to stop.

Overall, the invention facilitates the prediction of pump life in the view of the tightness of pump-running. When the friction scheme of the rotor changes, then we can perceive it. Therefore it is easy to detect the warning status given by the change of rotor friction modes.

Also the friction "mapping" is possible, by which we can determine the tightness as a function of rotor angular position. This facilitates the determination whether the pump is tight in a certain angle or uniformly tight due to foreign material deposited inside the pump. This indicates the health of pump. Also this measurement is used for the inspection of the pump after assembly.

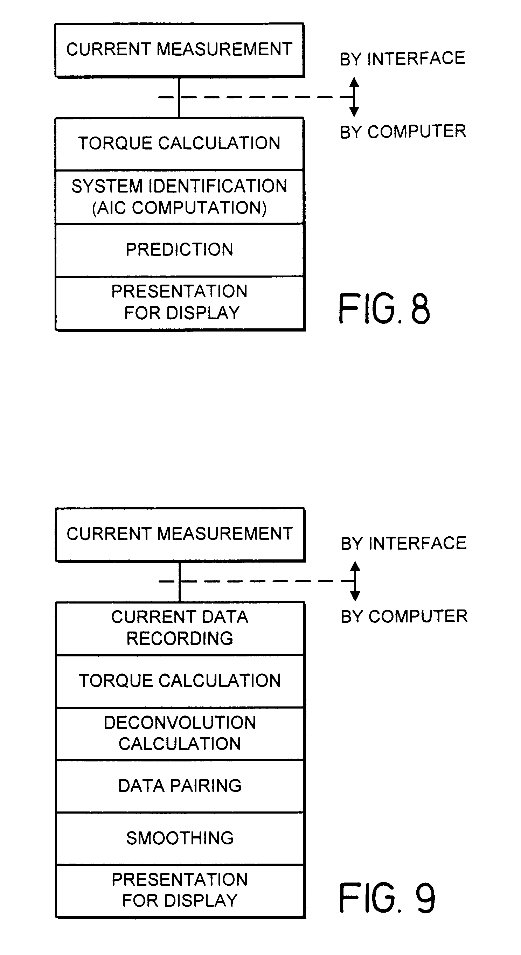

Other embodiments of this invention use the motor current for the actual measurement. When a motor is used to which the commercial electric power is directly supplied or a simple inverter is used that has no vector control scheme, the motor current is measured and used in the scheme shown in the embodiments as set forth in Figures 8 and 9.

Figure 8 shows the hierarchy of the programs used for the torque estimation and prediction by directly using the measurement results of motor current. In this embodiment, the motor current is measured in analogue mode and the current signal is converted to digital mode by the analogue-to-digital converter attached to the front before the communication port 11 of the interface shown in Figure 2. The torque calculation is performed by the computer on the basis of the current-to-torque characteristics of the motor used for the vacuum system. In this calculation, a table lookup method, where the specific torque for the measured current is determined from the current-to-torque data table obtained beforehand. An algorithm to use spline function is used for this. After the motor torque is obtained by this layer, then the computation to calculate the estimate and prediction of torque and the process of the data presentation for the display are performed in the same manner as the previous embodiments shown in Figure 4 and 5.

Figure 9 shows the hierarchy of the programs used for a friction mapper by directly using the results of current measurement. In these embodiments, the motor current is measured in analogue mode and the current signal is converted to digital mode by the analogue-to-digital converter attached to the front before the communication port 11 of the interface shown in Figure 2. For the friction mapping, it is important to use the current data obtained for a short period of time. Because the relation of current-to-torque data is a function of th rotation speed of the motor. Once the pump has a friction load, the motor tends to change the rotation speed in accordance with the load of friction. Therefore, the current data for short time during when the change of rotation is negligible small is used and the torque calculated from the current is regarded as corresponding to the motor load. For this short time torque calculation, a set of sequential current data to be calculated in the later processes is acquired in a fashion of time-series and recorded by this layer.

By the second layer, the torque calculation is performed on the basis of the current-to-torque characteristics of the motor. In this computation, a table lookup method, where the specific torque for the measured current is determined from the current-to-torque data table which is obtained beforehand. An algorithm to use spline function is used for this. After the motor torque is obtained by this layer, then the torque data pairing with the rotational position or the angle of the pump rotor and the torque data smoothing for noise reduction to obtain the good estimate of the torque are carried out. The results of this process is given in the same presentation as shown in Figure 7.

In this embodiment, the mapping can be applied to the inspection testing of the pump which is newly assembled. Because the pump tightness is localised in the certain range of the angular position and the absolute tightness is not necessary but angular position of relatively tight friction is necessary. The evaluation of the torque data which is obtained for short time can be used for this purpose.

For the evaluation of pump in long term running, intermittent use of this evaluation method is made from time to time and the development of the angular range of the tight friction is evaluated. When it becomes wider in the progress of time and the current averaged over the period of data recording becomes larger and larger, then it indicates the pump has become close to stop.

In the above embodiments, we have used the torque for the objective to be evaluated since it has the linear relation to the load of motor or pump tightness which reflects the presence or growing up of the layers of unwanted material made by the by-product of the process chemistry of the plant to which the pump is used. However when we apply non-linear Kalman filter (Reference to; R P Wishner, J A Tabacznski and M Athans: "A Comparison of Three Non-linear Filters", Automatica Vol. 5, no. 4(1969) 487-496) to the system identification algorithm, the estimation and prediction of the torque can be properly done by using and observing the electrical current signal, as well as using torque signal.

For the application of a friction mapper, when we apply non-linear Kalman filter to the smoothing filtration algorithm, the smoothening torque against the rotational angle can be properly done by using and observing the electrical current signal, as well as using the torque signal.

The summary of this non-linear Kalman filter is as follows. The measured current is arranged for the order of linear combination of AR order number of $p^{(i)}$ and construct a vector $X(i)$ with the measurement of the torque $T(i)$ at the time i as;

$$X(i) = (T(i-p^{(i)})) \; T(i-(p^{(i)}-1)) \; .......... \; T(i-1) \; T(i))^T$$

where the superscript T means the transpose and the Kalman filter algorithm is given by the following two equations. The H is a function that coverts the torque $T(i)$ into the current $I(i)$ at the time i.

$$X(i+1) = Fx(i) + w(i)$$

$$I(i) = H(T(i)) + v(i)$$

where $w(i)$ and $v(i)$ are the noise and F is a matrix given as;

$$F = \begin{bmatrix} 0 & 0 & \text{-----------} & 0 & A_p^{(i)} \\ 1 & 0 & \text{----------} & 0 & A_{p-1}^{(i)} \\ 0 & & & & \vdots \\ \vdots & & & & \vdots \\ \vdots & & & & \vdots \\ 0 & \text{----------} & 0 & 1 & A_1 \end{bmatrix}$$

By using this algorithm, we can directly use the current signal instead of using the torque signal or conversion calculation of current data to torque data. In the computation by this algorithm, the simple motor current data which can be measured by direct detection of motor driving current can be used and therefore the hardware system as shown in the drawing can be simpler. For example, the inverter is not necessary and the hierarchies of programs shown in Figures 8 and 9 do not need torque calculation.

**Claims**

1. A process for monitoring the performance of a vacuum pump during its use and for predicting its future operating characteristics, comprising:

   periodically measuring, during a revolution of a rotor of a motor for driving the pump, the rotational torque or the motor current in response to motor load;

   generating signals corresponding to the measured rotational torque or the measured motor current; and, at computation means, the steps of:

   processing the generated signals to provide a series of torque data;

   pairing the torque data with data relating to the rotational position of the rotor during the revolution; and

   predicting from the variation of the torque data with rotational position the future operating characteristics of the pump.

2. A process according to Claim 1 in which the rotational torque is measured and, during the processing step, a filtering algorithm is employed to extract the most likely data and obtain as the torque data an estimate of the torque.

3. A process according to Claim 1 in which the motor current is measured and, during the processing step, the torque data is obtained from a previously determined current-to-torque characteristic of the motor.

4. A process according to any one of the preceding claims, in which a trace of the variation of the torque data with rotational position is generated to enable the future operating characteristics to be predicted therefrom.

5. A process according to Claim 4, wherein, prior to the generation of the trace, the torque data is smoothed to decrease the effect of noise on the torque data.

6. A process according to any preceding claim, in which the torque or the current is measured through an electrical power control means which controls the operation of the motor.

7. A process according to Claim 6 in which the electrical power control means generates power by which the motor rotates.

**8.** A process according to any preceding claim in which an interface means converts the generated signals to digital signals which can be received by the computation means.

**9.** A process according to Claim 8 when dependent from Claim 6, in which the interface means comprises a communication port linked to a part of the electrical power control means from which the generated signal is an output, an interpreter means to interpret the signal such that it can be communicated on a data bus line to which a memory means and a communication controller which control the data transfer on the bus line are connected, and a separate pair of an interpreter port and a communication port connected to the computation means.

**Patentansprüche**

**1.** Verfahren zum Überwachen der Leistung einer Vakuumpumpe während ihres Gebrauchs und zum Vorhersagen ihrer zukünftigen Betriebseigenschaften, das umfaßt:

Periodisches Messen des Drehmoments oder des Motorstroms in Abhängigkeit der Motorlast während einer Rotorumdrehung eines Motors zum Antrieb der Pumpe,

Erzeugen von Signalen entsprechend dem gemessenen Drehmoment oder dem gemessenen Motorstrom und Durchführung folgender Schritte in Berechnungsmitteln:

Verarbeiten der erzeugten Signale zum Bereitstellen einer Reihe von Drehmomentdaten,

Paaren der Drehmomentdaten mit auf die Drehposition des Rotors während der Umdrehung bezogenen Daten, und

Vorhersagen der zukünftigen Betriebseigenschaften der Pumpe aus der Variation der Drehmomentdaten mit der Drehposition.

**2.** Verfahren nach Anspruch 1, bei welchem das Drehmoment gemessen und während des Verarbeitungsschritts ein Filteralgorithmus angewendet wird, um die wahrscheinlichsten Daten herauszuziehen und als die Drehmomentdaten eine Schätzung des Drehmoments zu erhalten.

**3.** Verfahren nach Anspruch 1, bei welchem der Motorstrom gemessen wird und während des Verarbeitungsschritts die Drehmomentdaten aus einer zuvor bestimmten Strom-Drehmoment-Charakteristik des Motors erhalten werden.

**4.** Verfahren nach einem der vorhergehenden Ansprüche, bei welchem eine Aufzeichnung der Variation der Drehmomentdaten mit der Drehposition erzeugt wird, um die Vorhersage der zukünftigen Betriebseigenschaften hieraus zu ermöglichen.

**5.** Verfahren nach Anspruch 4, wobei vor der Erzeugung der Aufzeichnung die Drehmomentdaten geglättet werden, um die Auswirkung von Rauschen auf die Drehmomentdaten zu verringern.

**6.** Verfahren nach einem der vorhergehenden Ansprüche, wobei das Drehmoment oder der Strom durch einen elektrischen Leistungsregler gemessen wird, welcher den Betrieb des Motors steuert.

**7.** Verfahren nach Anspruch 6, wobei der elektrische Leistungsregler Leistung erzeugt, durch welche der Motor sich dreht.

**8.** Verfahren nach einem der vorhergehenden Ansprüche, wobei eine Schnittstelle die erzeugten Signale in Digitalsignale umsetzt, die von den Berechnungsmitteln umfangen werden können.

**9.** Verfahren nach Anspruch 8 in Abhängigkeit von Anspruch 6, wobei die Schnittstelle einen Kommunikationsanschluß aufweist, der mit einem Teil des elektrischen Leistungsreglers gekoppelt ist, von welchem das erzeugte Signal ein Ausgangssignal ist, weiter ein Übersetzungsmittel zum Übersetzen des Signals derart, dass es auf einer Datenbusleitung kommuniziert werden kann, mit welcher ein Speicher und eine Kommunikationssteuerung verbunden sind, welche den Datentransfer auf der Busleitung steuert, und ein separates Paar eines Übersetzeranschlusses und eines Kommunikationsanschlusses aufweist, das an die Berechnungsmittel angeschlossen ist.

## Revendications

1. Procédé pour surveiller les performances d'une pompe à vide pendant son utilisation et pour prédire ses caractéristiques de fonctionnement futures, comprenant les étapes consistant à ;

    mesurer périodiquement, pendant une révolution d'un rotor d'un moteur pour entraîner la pompe, le couple de rotation ou le courant du moteur en réponse à une charge du moteur ;
    produire des signaux correspondant au couple de rotation mesuré ou au courant du moteur mesuré ; et, dans des moyens de calcul, les étapes consistant à :

    traiter les signaux produits pour fournir une série de données de couple ;
    apparier les données de couple avec des données concernant la position rotationnelle du rotor pendant la révolution ; et
    prédire, à partir de la variation des données de couple avec la position rotationnelle, les caractéristiques de fonctionnement futures de la pompe.

2. Procédé selon la Revendication 1, dans lequel le couple de rotation est mesuré et, pendant l'étape de traitement, un algorithme filtrant est utilisé pour extraire les données les plus probable et obtenir comme données de couple une estimation du couple.

3. Procédé selon la Revendication 1, dans lequel le courant du moteur est mesuré et, pendant l'étape de traitement, les données de couple sont obtenues d'une caractéristique courant/couple du moteur déterminée précédemment.

4. Procédé selon l'une quelconque des Revendications précédentes, dans lequel une trace de la variation des données de couple avec la position rotationnelle est générée pour permettre d'en déduire les futures caractéristiques de fonctionnement.

5. Procédé selon la Revendication 4, dans lequel, avant la génération de la trace, les données de couple sont lissées pour réduire l'influence du bruit sur les données de couple.

6. Procédé selon l'une quelconque des Revendications précédentes, dans lequel le couple ou le courant est mesuré par l'intermédiaire d'un moyen de commande de la puissance électrique qui commande le fonctionnement du moteur.

7. Procédé selon la Revendication 6, dans lequel le moyen de commande de la puissance électrique produit une puissance électrique qui fait tourner le moteur.

8. Procédé selon l'une quelconque des Revendications précédentes, dans lequel un moyen d'interface convertit les signaux produits en signaux numériques qui peuvent être reçus par les moyens de calcul.

9. Procédé selon la Revendication 8 lorsqu'elle est dépendante de la Revendication 6, dans lequel le moyen d'interface comprend un port de communication relié à une partie du moyen de commande de la puissance électrique d'où le signal produit est une sortie, un moyen d'interpréteur pour interpréter le signal de telle sorte qu'il puisse être communiqué sur une ligne de bus de données à laquelle sont reliés un moyen de mémoire et un contrôleur de communications qui contrôle le transfert des données sur la ligne de bus, et une paire indépendant constituée d'un port d'interpréteur et d'un port de communication reliés au moyen de calcul.

FIG. 1

FIG. 2

EP 0 828 332 B1

$\hat{T}$ (N+MIN)

N DATA

N DATA

N DATA

AIC (N+2)

1    2    3    - - - - -    N    N+1 N+2    - - - - -    i

# FIG. 3

| TORQUE CALCULATION |
|---|

BY INVERTER

BY COMPUTER

| SYSTEM IDENTIFICATION (AIC COMPUTATION) |
|---|
| PREDICTION |
| PRESENTATION FOR DISPLAY |

# FIG. 4

TORQUE SIGNAL

FIG. 5

| TORQUE CALCULATION |
| DECONVOLUTION CALCULATION |
| DATA PAIRING |
| SMOOTHING |
| PRESENTATION FOR DISPLAY |

BY INVERTER

BY COMPUTER

FIG. 6

TORQUE

0   30   60   90   120   150   180   210   240   270   300   330   DEGREES

FIG. 7

CURRENT MEASUREMENT

BY INTERFACE

BY COMPUTER

TORQUE CALCULATION

SYSTEM IDENTIFICATION
(AIC COMPUTATION)

PREDICTION

PRESENTATION
FOR DISPLAY

FIG. 8

CURRENT MEASUREMENT

BY INTERFACE

BY COMPUTER

CURRENT DATA
RECORDING

TORQUE CALCULATION

DECONVOLUTION
CALCULATION

DATA PAIRING

SMOOTHING

PRESENTATION
FOR DISPLAY

FIG. 9